# EUROPÄISCHE PATENTSCHRIFT

(11) **EP 3 121 505 B1**
(45) Veröffentlichungstag und Bekanntmachung des Hinweises auf die Patenterteilung: **14.03.2018**
(21) Anmeldenummer: 15178170.5
(22) Anmeldetag: 24.07.2015
(51) Int. Cl.: F17C 1/00

(54) **VORRICHTUNG ZUR AUFNAHME EINES KRYOFLUIDS**
DEVICE FOR HOLDING A CRYOFLUID
DISPOSITIF DE RECEPTION D'UN FLUIDE CRYOGENIQUE

(43) Veröffentlichungstag der Anmeldung: 25.01.2017
(73) Patentinhaber: SALZBURGER ALUMINIUM AKTIENGESELLSCHAFT, 5651 Lend (AT)
(72) Erfinder: LIND, Christoph, 5671 Bruck (AT)
(74) Vertreter: Weiser, Andreas

(56) Entgegenhaltungen:
- EP-A1- 2 765 296
- EP-A2- 1 298 381
- WO-A2-2008/042710
- AT-A4- 508 360
- FR-A1- 2 927 146
- GB-A- 2 318 861
- US-A- 1 901 447
- US-A1- 2011 311 928
- US-A1- 2014 069 931

## Beschreibung

Die vorliegende Erfindung betrifft eine Vorrichtung zur Aufnahme eines Kryofluids, insbesondere von LNG-Kraftstoff, umfassend einen an einem Fahrzeug montierbaren Kryobehälter mit einem allgemein-zylindrischen Mantel sowie einen an den Kryobehälter angeschlossenen Wärmetauscher zur Verdampfung des Kryofluids, wobei eine Ausgangsleitung des Kryobehälters mit einem Eingang des Wärmetauschers verbunden ist und der Wärmetauscher zudem über einen Eingang und einen Ausgang für Wärmetauschmedium verfügt.

Die US 2011/0311928 zeigt einen Flüssiggastank, an dessen Mantel ein Heizelement angeordnet ist, um durch Wärmeübertragung auf den Mantel des Tanks dessen Innendruck zu regulieren. Dazu wird dem Tank Flüssiggas in seinem gasförmigen Zustand entnommen, um dieses im Heizelement zu verbrennen. Auch die US 2014/0069931 A1, die FR 2 927 146 A1 und die WO 2008/042710 A2 zeigen Tanks, an deren Mantelflächen jeweils ein Heizelement angeordnet ist, um den Innendruck des Tanks zu regulieren.

Die AT 508 360 A4 zeigt einen Tank für Betriebsmittel, die beheizt werden müssen. Zu diesem Zweck ist an der Mantelfläche ein Wärmetauscher angebracht, wodurch Wärme eines Wärmetauschermediums vom Wärmetauscher auf das Betriebsmittel im Tank übertragen werden kann.

Um den Energiegehalt von Energieträgern, welche unter Normalbedingungen gasförmig sind, zu erhöhen, werden diese für Transport- und Lagerungszwecke auf Tieftemperatur abgekühlt und dabei zu einem Kryofluid zumindest teilverflüssigt und in temperaturisolierten Kryobehältern gespeichert. Zum Antrieb von Fahrzeugen werden z.B. verflüssigtes Erdgas (liquefied natural gas, LNG) oder verflüssigter Wasserstoff als Kryofluide mit hoher Energiedichte gespeichert, um hinterher zum Betrieb von im wesentlichen herkömmlichen Verbrennungskraftmaschinen oder Brennstoffzellen der Fahrzeuge genutzt zu werden.

Zu diesem Zweck wird das im flüssigen Zustand gespeicherte Kryofluid mittels eines Wärmetauschers in einen gasförmigen Zustand rückgewandelt. Wärmetauscher dieser Art benötigen jedoch viel Platz am Fahrzeug. So wird z.B. in der EP 2 765 296 A1 ein gekrümmter Wärmetauscher an einer der Endkappen verbaut. Ein solcher Wärmetauscher nimmt jedoch viel Platz vor der Endkappe ein, wodurch die Länge des Kryobehälters stark eingeschränkt ist und nur wenig Platz für die sich in diesem Bereich befindlichen Armaturen zur Verfügung steht.

Die Erfindung setzt sich zum Ziel, eine Vorrichtung zu schaffen, welche den bestehenden Bauraum besser ausnutzt.

Dieses Ziel wird mit einer Vorrichtung der einleitend genannten Art erreicht, die sich gemäß der Erfindung dadurch auszeichnet, dass sich der Wärmetauscher zumindest teilweise in einem Zwickel befindet, der zwischen dem Mantel und einem kleinstmöglichen, den Mantel umschreibenden, gedachten Quader eingeschlossen ist.

Erfindungsgemäß wird der Wärmetauscher nicht mehr - wie bei den bekannten Konstruktionen - an einer Stirnseite des Kryobehälters oder einer anderen Stelle im Fahrzeug verbaut, sondern an der Längsseite des Kryobehälters in einem der genannten "Mantelzwickel". Durch den solcherart am Behälterende eingesparten Platz kann der Kryobehälter länger ausgeführt werden, womit das Volumen des mitgeführten Kraftstoffs signifikant erhöht werden kann. Die Erfindung ermöglicht damit eine wesentlich bessere Ausnutzung des zur Verfügung stehenden Bauraums. Weiters ist der Wärmetauscher an der Längsseite des Kryobehälters gut zugänglich, wodurch er leicht gewartet werden kann.

In einer bevorzugten Ausführungsform der Erfindung ist der genannte Zwickel jener Seite des Kryobehälters abgewandt, die zur Montage an einer Tragkonsole des Fahrzeugs ausgebildet ist. Dadurch behindert der Wärmetauscher nicht die Montage des Kryobehälters an der Tragkonsole bzw. am Fahrzeug. Darüber hinaus ist der Wärmetauscher besonders leicht zugänglich, wenn er an der dem Fahrzeug abgewandten Seite liegt.

Gemäß einem weiteren bevorzugten Merkmal der Erfindung wird für den Wärmetauscher insbesondere jener Zwickel verwendet, der in der Montagestellung der Vorrichtung auf der Oberseite des Kryobehälters liegt, wodurch der Wärmetauscher im Fahrzeugbetrieb besser vor Steinschlag geschützt ist.

Bevorzugt ist der Wärmetauscher im Wesentlichen stabförmig und liegt parallel zur Zylinderachse des Mantels an dessen Außenseite. Die Außenform des Wärmetauschers kann dabei auch größtmöglich an die Form des Zwickels angepasst werden, die aus der Differenzmenge Quader - Mantel gebildet wird. Unter stabförmig wird eine gerade Form mit beliebigem Querschnitt verstanden. Die Länge des Wärmetauschers kann der Länge des Mantels entsprechen oder nur einen Teil davon, um weitere Armaturen im selben Zwickel unterzubringen.

Bevorzugt ist der Querschnitt des Wärmetauschers im Wesentlichen rund, um besonders kostengünstige und robuste Wärmetauscher einsetzen zu können.

Alternativ ist der Querschnitt des Wärmetauschers auf seiner dem Mantel zugewandten Seite an die Krümmung des Mantels angepasst, wodurch der Wärmetauscher besonders gut am Mantel angebracht werden kann. Weiters kann so der zur Verfügung stehende Bauraum noch besser ausgenutzt werden. Um einen besonders flachen, an die Krümmung der Mantelseite gut anpassbaren Wärmetauscher zu schaffen, kann der Wärmetauscher beispielsweise ein Doppelrohrwärmetauscher sein, der U-förmig oder mäanderförmig über die Außenseite des Mantels geführt ist und an dieser anliegt. Dies ist auch besonders dann von Vorteil, wenn die Vorrichtung mittels Spannbändern, die um den Kryobehälter verlaufen, an den Tragkonsolen festgezurrt wird. Der Wärmetauscher unterliegt bei solchen flachen Bauformen weniger Spannungen.

Um die Leitungen besonders platzsparend in Richtung zum Fahrzeug zu führen, kann - wenn der Kryobehälter eine konvexe Endkappe mit einer Scheitelebene umfasst - eine von einem Ausgang oder einem Eingang des Wärmetauschers ausgehende Leitung durch einen Zwickel zwischen der Endkappe und der genannten Scheitelebene ("Kappenzwickel") hindurchgeführt werden.

In einer bevorzugten Ausführungsform ragt der Wärmetauscher an zumindest einem Ende über die Länge des Mantels hinaus, wobei dort zumindest eine vom Wärmetauscher im Wesentlichen radial ausgehende Leitung in Richtung zum Fahrzeug geführt werden kann. Dies ermöglicht besonders gerade und damit kurze und robuste Leitungen, die dort auch direkt durch den genannten Kappenzwickel hindurch geführt werden können. Zudem kann die Länge des Wärmetauschers so groß wie möglich ausgeführt werden, um einen hohen Wirkungsgrad des Wärmetauschers zu erreichen.

Alternativ oder zusätzlich kann eine vom Wärmetauscher im Wesentlichen radial ausgehende Leitung auch über den Mantel in Richtung zum Fahrzeugs geführt werden. Hierbei kann der Wärmetauscher besonders kurz ausgeführt werden, um neben diesem weitere Armaturen zu montieren.

In jeder Ausführungsform ist es besonders günstig, wenn die Vorrichtung eine den genannten Wärmetauscher abdeckende Abdeckung hat, welche bevorzugt eine - in Richtung der Zylinderachse des Mantels gesehen - abgerundet L-förmige Kontur hat. Dadurch kann der Wärmetauscher von äußeren Einflüssen wie Niederschlag, Verschmutzung oder Steinschlag abgeschirmt werden. Zudem kann die Vorrichtung mittels einer solchen Bauweise besondern gut mittels Spannbändern an Tragkonsolen des Fahrzeugs montiert werden.

Bevorzugt befindet sich die Abdeckung innerhalb des genannten Zwickels, um den größtmöglichem Bauraum auszunutzen, ohne die Breite des Kryobehälters zu vergrößern.

Weiters weist die Vorrichtung bevorzugt auch einen Kappendeckel für eine Endkappe des Kryobehälters auf, der in Richtung der Zylinderachse des Mantels gesehen mit der Abdeckung fluchtet. Dadurch kann ein kombiniertes Abdecksystem sowohl für den Mantel- als auch für den Kappenzwickel geschaffen werden.

In einer Ausführungsform übergreift die Abdeckung den Wärmetauscher mit zur Zylinderachse des Mantels normalen Seitenwänden, wodurch der Wärmetauscher von dem Mantel und der Abdeckung gänzlich umschlossen werden kann.

In einer weiteren vorteilhaften Ausführungsform der Erfindung beherbergt die Abdeckung ferner an den Kryobehälter oder an den Wärmetauscher angeschlossene Armaturen, die sich wiederum im genannten Zwickel befinden. Diese Armaturen können beispielsweise zwischen dem Kryobehälter und dem Wärmetauscher liegen, z.B. ein Absperrventil oder eine Druckanzeige, oder auch dem Wärmetauscher nachgeschaltet sein. Alternativ oder zusätzlich können die Armaturen unabhängig vom Wärmetauscher an den Kryobehälter angeschlossen sein und z.B. als Betankungskupplung, Vent-Anschluss oder zugehöriges Handventil ausgeführt sein.

Weiters bevorzugt ist in dieser Ausführungsform zumindest eine der genannten Armaturen durch eine Öffnung in der Abdeckung zugänglich, um die Armaturen einfach bedienen zu können. Die Öffnungen können ihrerseits z.B. mit Deckeln abgedeckt werden.

Die Erfindung wird nachfolgend anhand von in den beigeschlossenen Zeichnungen dargestellten Ausführungsbeispielen näher erläutert. In den Zeichnungen zeigen:
Fig. 1 die erfindungsgemäße Vorrichtung gemäß einer ersten Ausführungsform in einer Perspektivansicht;
Fig. 2 die erfindungsgemäße Vorrichtung gemäß einer zweiten Ausführungsform in einer Perspektivansicht;
Fig. 3 die Vorrichtung von Fig. 2 in einer schematischen Stirnansicht; und
Fig. 4 die Vorrichtung von Fig. 1 in einer schematischen Seitenansicht;
die Fig. 5 - 7 weitere Ausführungsformen der erfindungsgemäßen Vorrichtung jeweils in einer Draufsicht (Fig. 5a, 6a, 7a) und einer Stirnansicht (Fig. 5b, 6b, 7b); und
Fig. 8 eine weitere Ausführungsform der erfindungsgemäßen Vorrichtung in einer Perspektivansicht.

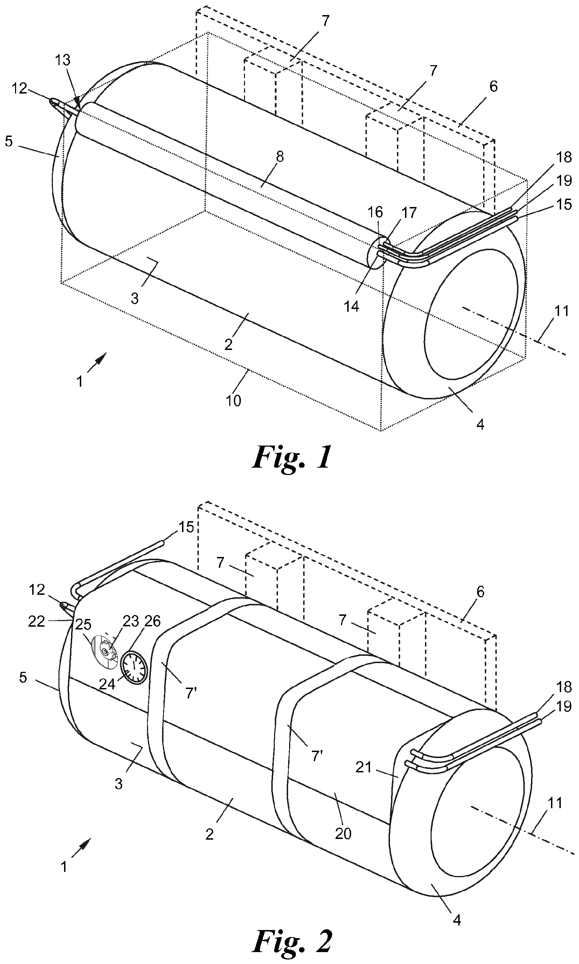

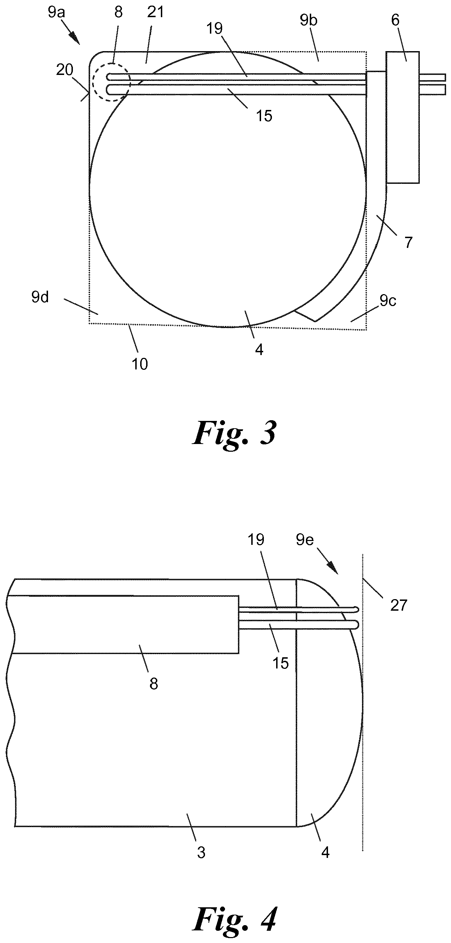

Fig. 1 zeigt eine Vorrichtung 1 mit einem Kryobehälter 2, umfassend einen zylindrischen Mantel 3 und zwei Endkappen 4, 5, zur Aufnahme eines Kryofluids. Das Kryofluid kann beispielsweise Erdgas sein, das bei Temperaturen von bis zu -161°C und einem Druck von bis zu 16 bar zumindest teilweise verflüssigt vorliegt (liquefied natural gas, LNG). Alternativ kann ein vergleichbares, in Verbrennungskraftmaschinen oder Brennstoffzellen einsetzbares Kryofluid, z.B. verflüssigter Wasserstoff, im Kryobehälter 2 gespeichert sein. Die Vorrichtung 1 wird beispielsweise in der Art eines herkömmlichen Kraftstoffbehälters seitlich am Chassis bzw. Rahmen 6 oder hinter der Fahrerkabine eines nicht weiter dargestellten Nutzfahrzeugs, z.B. eines Lastkraftwagens (LKWs) oder Personenkraftwagens (PKWs), montiert und kann dazu mit standardisierten Konsolensystemen, z.B. L- oder sichelförmigen Tragkonsolen 7 (Fig. 3), zusammenwirken, auf denen sie mittels Spannbändern 7' an den Tragkonsolen 7 fixiert wird.

Das Kryofluid kann aber auch ein Kältemittel sein, beispielsweise Flüssigstickstoff, mit dem das Kühlsystem von Kühllastern betrieben wird, z.B. von Lebensmitteltransportern. Demgemäß kann die Vorrichtung 1 auch für die Speicherung solcher Kältemittel auf LKWs oder LKW-Anhängern verwendet werden.

Um das im Kryobehälter 2 in flüssigem Zustand gespeicherte Kryofluid in einen gasförmigen Zustand umzuwandeln, verfügt die Vorrichtung 1 über einen Wärmetauscher 8. Der Wärmetauscher 8 befindet sich in einem Zwischenraum bzw. Zwickel 9a ("Mantelzwickel", siehe auch Fig. 3), der zwischen dem Mantel 3 und einem kleinstmöglichen, den Mantel 3 umschreibenden, gedachten Quader 10 eingeschlossen ist. Durch die Ausnutzung des Mantelzwickels 9a für den Wärmetauscher 8 können eine größere Länge und somit ein größeres Volumen des Kryobehälters 2 im Vergleich zum Stand der Technik erreicht werden.

Für eine platzsparende Raumausnutzung ist der Wärmetauscher 8 stabförmig ausgebildet und parallel zur Zylinderachse 11 des Mantels 3 an dessen Außenseite angeordnet. Unter stabförmig wird dabei eine langgestreckte, gerade Form mit beliebigem Querschnitt verstanden.

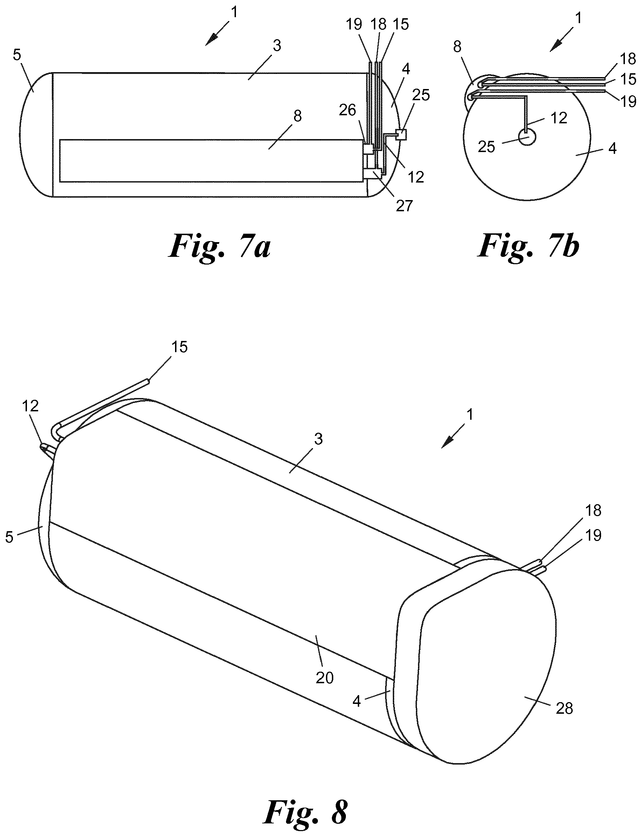

So kann der Querschnitt des Wärmetauschers 8 beispielsweise im Wesentlichen rund sein (siehe Fig. 1) oder auf seiner dem Mantel 3 zugewandten Seite an die Krümmung des Mantels 3 angepasst sein (siehe Fig. 7a und 7b).

Beispielsweise kann der Wärmetauscher 8 ein Doppelrohrwärmetauscher sein, d.h. ein Rohr-in-Rohr- bzw. Koaxialwärmetauscher, der U-förmig oder mäanderförmig über die Außenseite des Mantels 3 geführt ist und an dieser anliegt. Alternativ kann der Wärmetauscher 8 beispielsweise als Kreuzstrom- oder Kreuzgegenstromwärmetauscher, Plattenwärmetauscher, Spiralwärmetauscher, Rohrbündelwärmetauscher, U-Rohrwärmetauscher, Mantelrohrwärmetauscher, Heizregister oder Gegenstrom-Schichtwärmetauscher ausgebildet sein.

Um Kryofluid aus dem Kryobehälter 2 zu entnehmen, ist eine Ausgangsleitung 12 des Kryobehälters 2 mit einem Eingang 13 des Wärmetauschers 8 verbunden. Nachdem das Kryofluid den Wärmetauscher 8 durchlaufen hat, kann es über eine mit einem Ausgang 14 des Wärmetauschers 8 verbundene Leitung 15 z.B. dem Motor des Fahrzeugs zugeführt werden. Der Wärmetauscher 8 verfügt zudem über einen Eingang 16 und einen Ausgang 17 und daran angeschlossene Leitungen 18, 19 für Wärmetauschmedium, z.B. Motorkühlmittel. Die Ausgänge 14, 16 und der Eingang 17 münden in einer zur Zylinderachse 11 des Mantels normalen Ebene aus, wodurch die Leitungen 15, 18, 19 im Bereich des Wärmetauschers 8 parallel zur Zylinderachse 11 im Zwickel 9a verlaufen.

Wie in Fig. 2 gezeigt, kann der Kryobehälter 2 zum Schutz des Wärmetauschers 8 optional mit einer abnehmbaren Abdeckung 20 versehen werden. Die Abdeckung 20 hat in Richtung der Zylinderachse 11 gesehen etwa abgerundet L-förmige Kontur, wobei sich die Abdeckung 20 in dieser Ausführungsform innerhalb des genannten Zwickels 9a befindet, um den zur Verfügung stehenden Bauraum maximal auszunutzen. Die Abdeckung 20 kann ferner zur Zylinderachse 11 des Mantels 3 normale Seitenwände 21, 22 haben, welche den Wärmetauscher 8 zumindest teilweise übergreifen. Optional umhüllt die Abdeckung 20 mit ihren Seitenwänden 21, 22 in Verbindung mit dem Mantel 3 den Wärmetauscher 8 allseitig.

Ein Handventil 23 in der Leitung 12 zur Unterbrechung der Verbindung zwischen Wärmetauscher 8 und Kryobehälter 2 und ein Manometer 24 in der Leitung 12 zur Druckanzeige des im Kryobehälter 2 vorherrschenden Gasdrucks sind über Öffnungen 25, 26 in der Abdeckung 20 zugänglich. Weiters sind eine Betankungskupplung (nicht gezeigt) zur Füllung des Kryobehälters 2 sowie ein Auslass samt Handventil (nicht gezeigt) zur manuellen Reduzierung des im Kryobehälter 2 vorherrschenden Gasdrucks von der Abdeckung 20 abgedeckt, welche zu diesem Zweck z.B. auch aufklappbar oder teilweise öffenbar gestaltet sein kann. Die Betankungskupplung, der Auslass sowie das Handventil sind jeweils an Leitungen des Kryobehälters 2 angeschlossen und in der Regel nicht mit dem Wärmetauscher 8 verbunden.

Fig. 3 zeigt den genannten Zwickel 9a, der sich in der Montagestellung der Vorrichtung 1 auf der Oberseite des Kryobehälters 2 befindet und jener Seite des Kryobehälters 2 abgewandt ist, die zur Montage an der Tragkonsole 7 des Fahrzeugs ausgebildet ist. Dies ist vorteilhaft für eine leichte Zugänglichkeit der Armaturen 23, 24, Schutz vor Steinschlag und eine ungehinderte Montage der Vorrichtung 1 an der Tragkonsole 7.

Alternativ kann sich der Wärmetauscher 8 bzw. die Abdeckung 20 auch in einem der drei anderen Zwickel 9b, 9c, 9d befinden, wodurch sich andere Bauteile als der Wärmetauscher 8 im erstgenannten Zwickel 9a befinden können, z.B. die Betankungskupplung oder eine Trittvorrichtung zum Einstieg in die Fahrerkabine des Fahrzeugs.

Bei einer Anbringung des Wärmetauschers 8 in den Zwickeln 9b, 9c, die jeweils jener Seite des Kryobehälters 2 zugewandt sind, die zur Montage an der Tragkonsole 7 des Fahrzeugs ausgebildet ist, können die Längen der Leitungen 15, 18, 19 besonders kurz gehalten werden.

Fig. 4 zeigt die Ausführung der Endkappe 4 als konvexe Endkappe 4 mit einer Scheitelebene 27. Die genannten, von einem Ausgang 14, 16 oder einem Eingang 13, 17 des Wärmetauschers 8 ausgehenden Leitungen 12, 15, 18, 19 sind in dieser Ausführungsform durch einen Zwickel 9e ("Kappenzwickel") hindurchgeführt, der zwischen der Endkappe 4 und der Scheitelebene 27 eingeschlossen ist. Dadurch wird erreicht, dass die vom Wärmetauscher 8 ausgehenden Leitungen 15, 18, 19 die Längserstreckung des Kryobehälters 2 nicht überragen, wenn sie das Fahrzeugchassis 6 erreichen; die gleiche Maßnahme kann auf Seite der Endkappe 5 für die Leitung 12 getroffen werden.

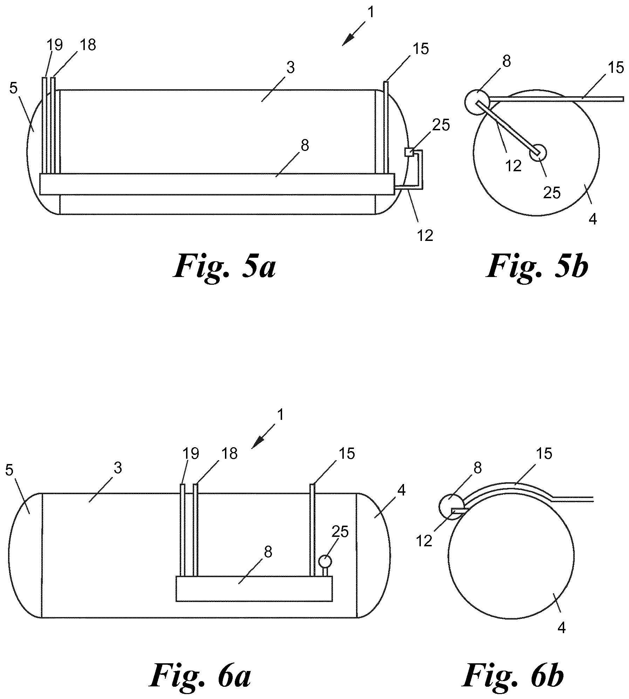

Die Länge des Wärmetauschers 8 ist nicht von der Länge des Kryobehälters 2 abhängig und kann im Wesentlichen so lange wie der Mantel 3 sein, wie in Fig. 1 gezeigt, oder auch länger, wie in den Fig. 5a und 5b gezeigt. In letzterer Ausführungsform ragt der Wärmetauscher 8 mit beiden - alternativ nur mit einem seiner beiden - Enden über die Länge des Mantels 3 hinaus. Hierbei können die Leitungen 12, 15, 18, 19 vom Wärmetauscher 8 ausgehend in Richtung zum Fahrzeug geführt werden und dabei den Kappenzwickel 9e durchlaufen. Die Leitung 12 ist dabei an einen Anschlussstutzen 25 der Endkappe 4 angeschlossen.

Die Fig. 6a und 6b zeigen eine Ausführungsform, in der der Wärmetauscher 8 kürzer ist als der Mantel 3. Anstatt die Leitungen 12, 15, 18, 19 durch einen Kappenzwickel 9e zu führen, können sie aus dem Zwickel 9a heraus und über den Mantel 3 geführt werden. Optional können die Leitungen 12, 15, 18, 19 dabei auch durch den Zwickel 9b geführt werden, um Bauraum einzusparen. Die Leitung 12 ist hierbei an einen Anschlussstutzen 25 im Mantel 3 angeschlossen.

Die Fig. 7a und 7b zeigen eine Ausführungsform, in der alle Leitungen 12, 15, 18, 19 über einen einzigen der beiden Kappenzwickel 9e geführt werden. Ist der Wärmetauscher 8 dabei ein Doppelrohr- bzw. Koaxialwärmetauscher, können jeweils zwei der Leitungen in einem Doppelrohr 26, 27 geführt werden.

Fig. 8 zeigt, dass auch zumindest eine der Endkappen 4, 5 mit einem Kappendeckel 28 versehen werden kann. Der Kappendeckel 28 kann mit der Abdeckung 20 - gesehen in Richtung der Zylinderachse 11 - fluchten. Die Abdeckung 20 kann hierbei in Richtung der Zylinderachse 11 über den Mantel 3 hinausragen, um mit dem Kappendeckel 28 bündig abzuschließen, oder Abdeckung 20 und Kappenzwickel 28 können sich dort teilweise überlappen.

Der Mantel 3 ist in den Fig. 1 - 8 zylindrisch dargestellt, kann in weiteren Ausführungsformen jedoch auch allgemein-zylindrisch sein. Unter dem Begriff "allgemeinzylindrisch" wird ein Zylinder mit einer beliebigen Grund- bzw. Querschnittsfläche verstanden, sei sie kreisrund, oval, rechteckig, quadratisch oder quadratisch mit abgerundeten Ecken oder sonstwie geformt. So kann der Mantel 3 in einer Ausführungsform insbesondere auch einen D-förmigen Querschnitt haben, wobei dann nur mehr zwei Mantelzwickel auf der runden Seite des "D" zur Verfügung stehen.

Die Erfindung ist demgemäß nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Vorrichtung zur Aufnahme eines Kryofluids, insbesondere von LNG-Kraftstoff, umfassend einen an einem Fahrzeug montierbaren Kryobehälter (2) mit einem allgemein-zylindrischen Mantel (3) sowie einen an den Kryobehälter (2) angeschlossenen, im Wesentlichen stabförmigen Wärmetauscher (8) zur Verdampfung des Kryofluids, wobei eine Ausgangsleitung (12) des Kryobehälters (2) mit einem Eingang (13) des Wärmetauschers (8) verbunden ist und der Wärmetauscher (8) zudem über einen Eingang (16) und einen Ausgang (17) für Wärmetauschmedium verfügt, **dadurch gekennzeichnet, dass** der Wärmetauscher (8) im Wesentlichen parallel zur Zylinderachse (11) des Mantels (3) an dessen Außenseite liegt und sich der Wärmetauscher (8) zumindest teilweise in einem Zwickel (9a, 9b, 9c, 9d) befindet, der zwischen dem Mantel (3) und einem kleinstmöglichen, den Mantel (3) umschreibenden, gedachten Quader (10) eingeschlossen ist.

2. Vorrichtung nach Anspruch 1, **dadurch gekennzeichnet, dass** der genannte Zwickel (9a, 9b, 9c, 9d) jener Seite des Kryobehälters (2) abgewandt ist, die zur Montage an einer Tragkonsole (7) des Fahrzeugs ausgebildet ist.

3. Vorrichtung nach Anspruch 1 oder 2, **dadurch gekennzeichnet, dass** der genannte Zwickel (9a, 9b, 9c, 9d) in der Montagestellung der Vorrichtung (1) auf der Oberseite des Kryobehälters (2) liegt.

4. Vorrichtung nach einem der Ansprüche 1 bis 3, **dadurch gekennzeichnet, dass** der Querschnitt des Wärmetauschers (8) im Wesentlichen rund ist.

5. Vorrichtung nach einem der Ansprüche 1 bis 3, **dadurch gekennzeichnet, dass** der Querschnitt des Wärmetauschers (8) auf seiner dem Mantel (3) zugewandten Seite an die Krümmung des Mantels (3) angepasst ist.

6. Vorrichtung nach Anspruch 5, **dadurch gekennzeichnet, dass** der Wärmetauscher (8) ein Doppelrohrwärmetauscher ist, der U-förmig oder mäanderförmig über die Außenseite des Mantels (3) geführt ist und an dieser anliegt.

7. Vorrichtung nach einem der Ansprüche 1 bis 6, **dadurch gekennzeichnet, dass** der Kryobehälter (2) eine konvexe Endkappe (4, 5) mit einer Scheitelebene (27) umfasst, und dass eine von einem Ausgang (14, 17) oder einem Eingang (16) des Wärmetauschers (8) ausgehende Leitung (12, 15, 18, 19) durch einen Zwickel (9e) zwischen der Endkappe (5) und der genannten Scheitelebene (27) hindurchgeführt ist.

8. Vorrichtung nach einem der Ansprüche 1 bis 7, **dadurch gekennzeichnet, dass** der Wärmetauscher (8) an zumindest einem Ende über die Länge des Mantels (3) hinausragt und dort zumindest eine vom Wärmetauscher (8) im Wesentlichen radial ausgehende Leitung (12, 15, 18, 19) in Richtung zum Fahrzeug geführt ist.

9. Vorrichtung nach einem der Ansprüche 1 bis 8, **dadurch gekennzeichnet, dass** zumindest eine vom Wärmetauscher (8) im Wesentlichen radial ausgehende Leitung (12, 15, 18, 19) über den Mantel (3) in Richtung zum Fahrzeugs geführt ist.

10. Vorrichtung nach einem der Ansprüche 1 bis 9, **gekennzeichnet durch** eine den genannten Wärmetauscher (8) abdeckende Abdeckung (20), welche bevorzugt eine - in Richtung der Zylinderachse (11) des Mantels (3) gesehen - abgerundet L-förmige Kontur hat.

11. Vorrichtung nach Anspruch 10, **dadurch gekennzeichnet, dass** sich die Abdeckung (20) innerhalb des genannten Zwickels (9a, 9b, 9c, 9d) befindet.

12. Vorrichtung nach Anspruch 10 oder 11, **dadurch gekennzeichnet, dass** die Vorrichtung (1) ferner einen Kappendeckel (28) für eine Endkappe (4, 5) des Kryobehälters (2) aufweist, der in Richtung der Zylinderachse (11) des Mantels (3) gesehen mit der Abdeckung (20) fluchtet.

13. Vorrichtung nach einem der Ansprüche 10 bis 12, **dadurch gekennzeichnet, dass** die Abdeckung (20) ferner an den Kryobehälter (2) oder an den Wärmetauscher (8) angeschlossene Armaturen (23, 24) beherbergt, die sich wiederum im genannten Zwickel (9a, 9b, 9c, 9d) befinden.

14. Vorrichtung nach Anspruch 13, **dadurch gekennzeichnet, dass** zumindest eine der genannten Armaturen (23, 24) durch eine Öffnung in der Abdeckung (20) zugänglich ist.

## Claims

1. Apparatus for the reception of a cryogenic fluid, in particular LNG fuel, comprising a cryogenic container (2) having a generally cylindrical mantle (3) and a substantially bar-shaped heat exchanger (8) for vaporizing the cryogenic fluid, wherein an output line (12) of the cryogenic container (2) is connected with an input (13) of the heat exchanger (8) and the heat exchanger (8) is provided with an input (16) and an output (17) for a heat exchange medium, **characterized in that** the heat exchanger (8) lies substantially parallel to the cylinder axis (11) of the mantle (3) on the outside thereof and **in that** the heat exchanger (8) is at least partially located in a gusset (9a, 9b, 9c, 9d) that is enclosed between the mantle (3) and the smallest possible imaginary cuboid (10) that circumscribes the mantle (3).

2. Apparatus according to claim 1, **characterized in that** said gusset (9a, 9b, 9c, 9d) faces away from that side of the cryogenic container (2) which is configured to be mounted on a support console (7) of the vehicle.

3. Apparatus according to claim 1 or 2, **characterized in that** said gusset (9a, 9b, 9c, 9d) lies, in the mounting position of the apparatus (1), on the top side of the cryogenic container (2).

4. Apparatus according to any one of the claims 1 to 3, **characterized in that** the cross section of the heat exchanger (8) is substantially round.

5. Apparatus according to any one of the claims 1 to 3, **characterized in that** the cross section of the heat exchanger (8) is, on its side facing the mantle (3), adapted to the curvature of the mantle (3).

6. Apparatus according to claim 5, **characterized in that** the heat exchanger (8) is a double tube heat exchanger that is led in the form of a U or a meander over the outside of the mantle (3) and abuts thereon.

7. Apparatus according to any one of the claims 1 to 6, **characterized in that** the cryogenic container (2) comprises a convex end cap (4, 5) with an apex plane (27), and **in that** a connection line (12, 15, 18, 19) departing from an output (14, 17) or an input (16) of the heat exchanger (8) passes through a gusset (9e) between the end cap (5) and said apex plane (27).

8. Apparatus according to any one of the claims 1 to 7, **characterized in that** the heat exchanger (8), on at least one end, protrudes over the length of the mantle (3), and that there at least one connection line (12, 15, 18, 19) departs from the heat exchanger (8) in a substantially radial direction and is led to the vehicle.

9. Apparatus according to any one of the claims 1 to 8, **characterized in that** at least one connection line (12, 15, 18, 19) departing from the heat exchanger (8) in a substantially radial direction is led over the mantle (3) to the vehicle.

10. Apparatus according to any one of the claims 1 to 9, **characterized by** a cover (20) covering said heat exchanger (8), which cover has a contour in the form of a rounded L, when seen in the direction of the cylinder axis (11) of the mantle (3).

11. Apparatus according to claim 10, **characterized in that** the cover (20) is located within said gusset (9a, 9b, 9c, 9d) .

12. Apparatus according to claim 10 or 11, **characterized in that** the apparatus (1) further comprises a cap cover (28) for an end cap (4, 5) of the cryogenic container (2), which cap cover is aligned with the cover (20) when seen in the direction of the cylinder axis (11) of the mantle (3).

13. Apparatus according to any one of the claims 10 to 12, **characterized in that** the cover (20) further houses armatures (23, 24) connected to the cryogenic container (2) or the heat exchanger (8), which armatures are also located in said gusset (9a, 9b, 9c, 9d).

14. Apparatus according to claim 13, **characterized in that** at least one of said armatures (23, 24) is accessible through an opening in the cover (20).

## Revendications

1. Dispositif de réception d'un fluide cryogénique, notamment d'un carburant au gaz naturel liquéfié, comprenant un récipient cryogénique (2), pouvant être monté sur un véhicule, avec une enveloppe (3) généralement cylindrique, ainsi qu'un échangeur de chaleur (8), essentiellement en forme de barre, raccordé au récipient cryogénique (2), pour l'évaporation du fluide cryogénique, où une conduite de sortie (12) du récipient cryogénique (2) est reliée avec une entrée (13) de l'échangeur de chaleur (8) et l'échangeur de chaleur (8) dispose en outre d'une entrée (16) et d'une sortie (17) pour le milieu échangeur de chaleur, **caractérisé en ce que** l'échangeur de chaleur (8) se situe sensiblement parallèle par rapport à l'axe de cylindre (11) de l'enveloppe (3) au niveau du côté externe de l'enveloppe et que l'échangeur de chaleur (8) se trouve au moins partiellement dans un gousset (9a, 9b, 9c, 9d) qui est compris entre l'enveloppe (3) et le parallélépipède (10) imaginaire le plus petit possible entourant l'enveloppe (3).

2. Dispositif selon la revendication 1, **caractérisé en ce que** ledit gousset (9a, 9b, 9c, 9d) est à l'opposé de cet côté du récipient cryogénique (2) qui est conçu pour le montage sur une console de support (7) du véhicule.

3. Dispositif selon la revendication 1 ou 2, **caractérisé en ce que** ledit gousset (9a, 9b, 9c, 9d) se situe sur le côté supérieur du récipient cryogénique (2) dans la position de montage du dispositif (1).

4. Dispositif selon l'une des revendications 1 à 3, **caractérisé en ce que** la section transversale de l'échangeur de chaleur (8) est essentiellement circulaire.

5. Dispositif selon l'une des revendications 1 à 3, **caractérisé en ce que** la section transversale de l'échangeur de chaleur (8) est ajustée à la courbure de l'enveloppe (3) au niveau de son côté orienté vers l'enveloppe (3).

6. Dispositif selon la revendication 5, **caractérisé en ce que** l'échangeur de chaleur (8) est un échangeur de chaleur à double tube qui est mené sous la forme d'un U ou sous la forme de méandres par-dessus le côté externe de l'enveloppe (3) et est plaqué contre ceci.

7. Dispositif selon l'une des revendications 1 à 6, **caractérisé en ce que** le récipient cryogénique (2) comprend un capuchon d'extrémité (4, 5) convexe doté d'un plan sommital (27), et qu'une conduite (12, 15, 18, 19) partant d'une sortie (14, 17) ou d'une entrée (16) de l'échangeur de chaleur (8) est menée à travers un gousset (9e) entre le capuchon d'extrémité (5) et ledit plan sommital (27).

8. Dispositif selon l'une des revendications 1 à 7, **caractérisé en ce que** l'échangeur de chaleur (8) dépasse au niveau d'au moins une extrémité par-dessus la longueur de l'enveloppe (3) et qu'à cet endroit, une conduite (12, 15, 18, 19) partant de manière essentiellement radiale de l'échangeur de chaleur (8) est menée en direction au véhicule.

9. Dispositif selon l'une des revendications 1 à 8, **caractérisé en ce qu'**au moins une conduite (12, 15, 18, 19) partant de manière essentiellement radiale de l'échangeur de chaleur (8) est menée par-dessus l'enveloppe (3) en direction au véhicule.

10. Dispositif selon l'une des revendications 1 à 9, **caractérisé par** une couverture (20), laquelle a de préférence un contour arrondi en forme de L, vu dans la direction de l'axe de cylindre (11) de l'enveloppe (3), recouvrant ledit l'échangeur de chaleur (8).

11. Dispositif selon la revendication 10, **caractérisé en ce que** la couverture (20) se trouve à l'intérieur dudit gousset (9a, 9b, 9c, 9d).

12. Dispositif selon la revendication 10 ou 11, **caractérisé en ce que** le dispositif (1) présente en outre un couvercle de capuchon (28) pour un capuchon d'extrémité (4, 5) du récipient cryogénique (2), lequel couvercle est aligné avec la couverture (20), vu dans la direction de l'axe de cylindre (11) de l'enveloppe (3).

13. Dispositif selon l'une des revendications 10 à 12, **caractérisé en ce que** la couverture (20) abrite en outre des armatures (23, 24) raccordées au récipient cryogénique (2) ou à l'échangeur de chaleur (8) qui se trouvent également dans ledit gousset (9a, 9b, 9c, 9d).

14. Dispositif selon la revendication 13, **caractérisé en ce qu'**au moins l'une desdites armatures (23, 24) est accessible par une ouverture dans la couverture (20).
